# EUROPÄISCHE PATENTANMELDUNG

(11) **EP 0 945 373 A2**
(43) Veröffentlichungstag der Anmeldung: **29.09.1999**
(21) Anmeldenummer: 99105920.5
(22) Anmeldetag: 24.03.1999
(51) Int. Cl.: B65G 47/14

(54) **Übergabevorrichtung zum Transport von Langholz**

(30) Priorität: 25.03.1998 DE 19813040
(71) Anmelder: Holtec GmbH & Co., 53940 Hellenthal-Blumenthal (DE)
(72) Erfinder: Klement, Peter Dipl.-Ing., 53940 Hellenthal (DE)
(74) Vertreter: Lins, Edgar, Dipl.-Phys. Dr.jur.

(57) **Zusammenfassung**

Eine Übergabevorrichtung zum Transport von quer zur Förderrichtung zugeführtem Langholz (3) auf eine Abfördervorrichtung (7), bei der eine Mehrzahl von parallel zueinander und gegenüber der Lotrechten geneigt angeordneten, gegeneinander abgedichtet ausgebildeten Stufen (A, B), die jeweils relativ zu einer benachbarten Stufe (A, B) derart zyklisch in Neigungsrichtung bewegbar ausgebildet sind, daß in einer Übernahmeposition einer Stufe (A) die in Förderrichtung folgende Stufe (B) über dem Niveau der vorhergehenden Stufe (A) liegt und daß die folgende Stufe (B) in ihrer Übernahmeposition auf oder unter dem Niveau der vorhergehenden Stufe (A) liegt, ermöglicht eine hohe Vereinzelungsleistung bei großer Transportkapazität dadurch, daß am Übergabeende zur Abfördereinrichtung (7) Stufen (A, B) mit verringerter Tiefe ausgebildet sind, deren Antrieb zur Durchführung eines entsprechend zeitlich kürzeren Zyklus ausgebildet ist.

## Beschreibung

Die Erfindung betrifft eine Übergabevorrichtung zum Transport von quer zur Förderrichtung zugeführtem Langholz auf eine Abfördervorrichtung, bei der eine Mehrzahl von parallel zueinander und gegenüber der Lotrechten geneigt angeordneten, gegeneinander abgedichtet ausgebildeten Stufen, die jeweils relativ zu einer benachbarten Stufe derart zyklisch in Neigungsrichtung bewegbar ausgebildet sind, daß in einer Übernahmeposition einer Stufe die in Förderrichtung folgende Stufe über dem Niveau der vorhergehenden Stufe liegt und daß die folgende Stufe in ihrer Übernahmeposition auf oder unter dem Niveau der vorhergehenden Stufe liegt.

Zur Übergabeförderung von Langholz, insbesondere geschältem Stammholz sind verschiedene Vorrichtungen bekannt, die zugleich die Funktion haben, das Langholz zu vereinzeln bzw. zu gruppieren, also aus ggfs. aufgehäuftem Langholz jeweils einen Stamm oder eine geringe Anzahl von Stämmen heraus zu gruppieren und über die Abfördereinrichtung einer weiteren Verarbeitung zuzuführen.

Es ist bekannt, die Gruppierung an schräg aufwärts gerichteten Fördereinrichtungen vorzunehmen, die beispielsweise aus einer Mehrzahl von über die Länge des Langholzes nebeneinander angeordneten Förderketten bestehen, die miteinander fluchtend Mitnehmerleisten zur Aufnahme des Langholzes aufweisen. Das Langholz wird über die Förderketten durch die Mitnehmerleisten hochgefördert und auf einen Längsförderer abgeworfen. Da die Mitnehmerleisten auf der Unterseite der Kettenführung wieder zurückgeführt werden müssen, bestehen in der Breite der Fördereinrichtung notwendigerweise zwischen den Ketten und der Abfördereinrichtung Spalte, in denen sich Reststücke und Bruchstücke verfangen und die Übergabeeinrichtung blockieren können.

Es sind ferner Vereinzelungsstufen mit Stufenschiebern bekannt, bei denen unbewegliche plattenförmige Mittelstücke von gestuften, beweglichen Randstücken begrenzt werden. Die stufenförmigen beweglichen Randstücke wirken mit ebenfalls stufenförmig ausgebildeten unbeweglichen Randstücken zum Zwecke der Vereinzelung bzw. Gruppenbildung zusammen. Auch bei sehr geringen Abständen zwischen den Randstücken kommt es immer wieder vor, daß Bruchstücke oder zu kurze Stücke auf dem starren Mittelteil wippen und die Stufen somit blockieren, so daß die Vereinzelung bzw. Gruppenbildung der nachfolgenden Stämme nicht mehr möglich ist.

Durch US 3,524,532 ist eine Übergabevorrichtung der eingangs erwähnten Art bekannt. Eine derartige Übergabevorrichtung ist gegen eine Blockierung durch Reststücke und Bruchstücke unanfällig. Für die Dimensionierung der Übergabevorrichtung ist von Bedeutung, daß die Vereinzelungsleistung eine möglichst geringe Tiefe der Stufe erfordert, während im Hinblick auf die Transportkapazität und auf den mechanischen Aufwand für die Antriebe der Stufen eine größere Tiefe der Stufen sinnvoll wäre. Insoweit mußte immer ein Komprommiß für die gegenläufigen Forderungen geschlossen werden.

Der Erfindung liegt demgegenüber die Aufgabe zugrunde, eine Übergabevorrichtung der eingangs erwähnten Art zu erstellen, die eine hohe Vereinzelungsleistung bei großer Transportkapazität ermöglicht.

Erfindungsgemäß wird diese Aufgabe bei einer Übergabevorrichtung der eingangs erwähnten Art dadurch gelöst, daß am Übergabeende zur Abfördereinrichtung Stufen mit verringerter Tiefe ausgebildet sind, deren Antrieb zur Durchführung eines entsprechend zeitlich kürzeren Zyklus ausgebildet ist.

Durch die Stufen mit einer für die bewegten Massen beherrschbaren Frequenz der Stufenbewegungen wird eine gute Transportkapazität bereitgestellt, während für die Vereinzelung Stufen mit einer geringeren Tiefe und vorzugsweise auch mit einer geringeren Höhe ausgebildet sind, die somit eine geringere Masse aufweisen und daher mit einem kürzeren Zyklus, also einer höheren Frequenz, angetrieben werden können. Besonders vorteilhaft ist es dabei, wenn die Stufen unterschiedlicher Tiefe durch wenigstens eine feststehende Stufe voneinander getrennt sind.

Durch die durchgehend dichte Ausbildung der Auflageflächen der Stufen sowie der Abdichtung der relativ zueinander bewegten Stufen werden auch Rest- und Bruchholzstücke ohne Probleme über die Übergabevorrichtung transportiert und können nicht durch Verkanten oder Verhaken zu Blockaden führen.

Es ist zweckmäßig, wenn bei der erfindungsgemäßen Übergabevorrichtug eine Mehrzahl von Stufen mit gleicher Tiefe in Förderrichtung und mit einem synchronen Antrieb ausgestattet sind. Die in der gleichen Frequenz und vorzugsweise auch in der gleichen Phase bewegten Stufen gewährleisten, daß eine gleichmäßige Förderung über die Länge der Übergabevorrichtung auftritt und daß innerhalb der Übergabevorrichtungen keine ungewollten Stauungen für das Langholz auftreten.

Eine sehr energiesparende Realisierung des Antriebs der Stufen gelingt, wenn jeweils zwei benachbarte Stufen durch einen Antrieb streng gegenläufig antreibbar sind, so daß die beiden Stufen gegenseitig jeweils als Gegengewicht wirksam sind. Die durch die Abwärtsbewegung einer Stufe zurückgewonnene Energie wird dabei in die Aufwärtsbewegung der benachbarten Stufe eingebracht. Dies ist besonders einfach möglich, wenn der Antrieb zur Verwendung eines Druckmediums ausgelegt ist, insbesondere der Antrieb ein hydraulischer Antrieb ist.

Die erfindungsgemäße Anordnung der Stufen kann für einen im wesentlichen horizontalen Transport eingerichtet werden. Bevorzugt wird es im allgemeinen sein, wenn durch die Übergabevorrichtung auch ein Höhenunterschied bewältigt wird. Dies gelingt, indem eine Mittenposition einer in Förderrichtung folgenden Stufe höher liegt als eine Mittenposition einer vorhergehenden Stufe, egal ob von diesen Stufen nur eine oder beide Stufen bewegbar ausgebildet sind.

Die Erfindung soll im folgenden anhand eines in der Zeichnung schematisch dargestellten Ausführungsbeispiels näher erläutert werden.

Es zeigen:
- Figur 1 -: eine schematische Darstellung einer erfindungsgemäßen Übergabevorrichtung in einer Übernahmeposition von Stufen A
- Figur 2 -: die Darstellung gemäß Figur 1 in einer Zwischenposition der Stufen
- Figur 3 -: die Darstellung gemäß Figur 1 in einer Übernahme-position von Stufen B.

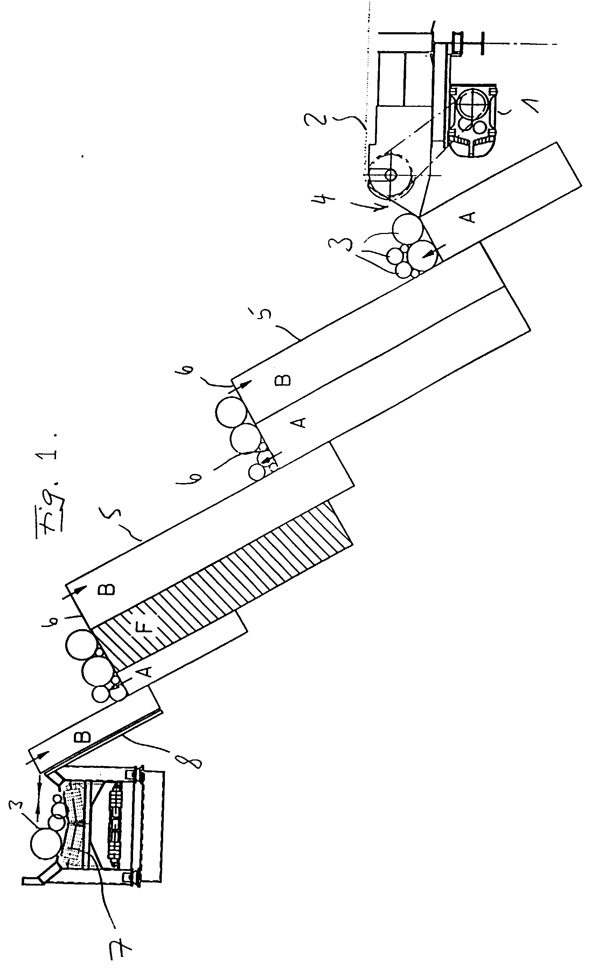

Figur 1 läßt einen durch einen Motor 1 angetriebenen Zuförderer 2 erkennen, über den Langholz 3 quer zur Transportrichtung liegend angefördert wird. Das Langholz 3 fällt in einen Abwurfraum 4, an den sich abgedichtet eine schräg zur Lotrechten angeordnete Stufe A anschließt, die in der Richtung der Schrägstellung der Stufe A auf und ab angetrieben wird. An die Stufe A schließt sich eine in Förderrichtung folgende Stufe B an, die parallel zu der vorhergehenden Stufe A angeordnet ist und, wie die Stufe A, eine über die gesamte Breite der Übergabevorrichtung dichte und abgedichtet geführte Seitenwand 5 aufweist.

In der in Figur 1 dargestellten Stellung befindet sich die Stufe B an ihrem oberen Umkehrpunkt und die in Förderrichtung dahinter befindliche Stufe A an ihrem unteren Umkehrpunkt. Dabei fluchten Auflageflächen 6 der beiden Stufen B, A miteinander, so daß in dieser Stellung eine Übergabe auf die Stufe A erfolgt. Die von der Stufe B auf die Stufe A in dieser Situation übergebene Menge ist durch die Tiefe der Stufe A dadurch begrenzt, daß sich die in Förderrichtung folgende Stufe B ebenfalls in ihrem oberen Umkehrpunkt befindet und die Seitenwand 5 der Stufe B den Aufnahmeraum auf der Oberseite 6 der Stufe A begrenzt.

In dem oberen Umkehrpunkt der Stufe B fluchtet deren Oberfläche 6 mit der Oberfläche 6 einer ortsfesten Stufe F und einer sich daran anschließenden Stufe A, deren Tiefe jedoch nur halb so groß ist wie die Tiefe der Stufen A, B in Förderrichtung stromaufwärts von der feststehenden Stufe F, deren Tiefe der Tiefe der stromaufwärts liegenden Stufen A, B entspricht. Es ist daher ersichtlich, daß die Aufnahmemenge für die Stufe A, die stromabwärts von der feststehenden Stufe F angeordnet ist, durch die geringere Tiefe dieser Stufe limitiert ist. Eine sich an diese Stufe A anschließende Stufe B mit ebenfalls einer verringerten Tiefe besorgt die Übergabe auf eine Abfördereinrichtung 7, die als Längsförderer für das Langholz 3 ausgebildet ist. Die der Abfördereinrichtung 7 benachbarte Stufe B ist über ihren Hub entlang einer dichten Wand 8 geführt, die feststehend ausgebildet ist und für die benachbarte Stufe B die Funktion übernimmt, die die dichten Seitenwände 5 der folgenden Stufen für die jeweils vorhergehende Stufe erfüllt. Selbstverständlich ist es auch möglich, daß die jeweils übergebende Stufe im oberen Umkehrpunkt höher liegt als die stromabwärts liegende übernehmende Stufe.

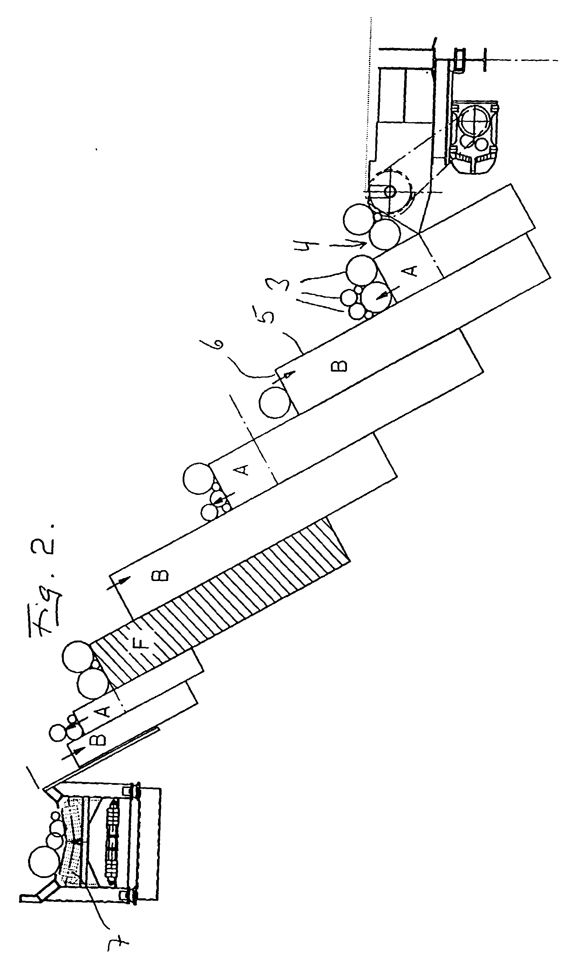

Figur 2 verdeutlicht, daß die dem Abwurfraum 4 benachbarte Stufe A eine ihrer Tiefe entsprechende Langholzmenge beim Aufwärtshub nach oben transportiert, während die in Förderrichtung folgende Stufe B das von der nachfolgenden Stufe A in der Position der Figur 1 aufgrund der Stufentiefe nicht übernommene Langholz wieder abwärts transportiert.

Die feststehende Stufe F fungiert als Vorratsspeicher für die nachfolgenden Stufen a, b mit einer geringeren Tiefe.

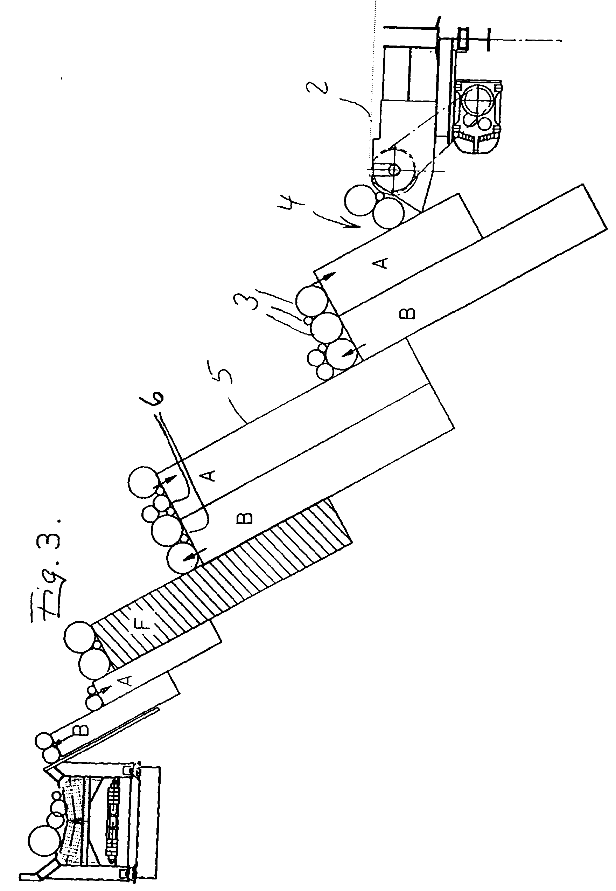

Bei der in Figur 3 dargestellten Position haben die vor der feststehenden Stufe F angeordneten Stufen A die Höhe der Stufen B überreicht, so daß eine Übernahmeposition für die Stufen B eingenommen ist. Dabei können die Stufen B nur die Langholzmenge aufnehmen, die ihre durch die Seitenwand 5 der in Förderrichtung folgenden Stufe A begrenzten Tiefe entspricht. Die nicht übernommenen Langholzstücke werden bei dem nun einsetzenden Abwärtshub der Stufen A wieder abwärts transportiert und begrenzen ggfs. die Aufnahmekapazität für die Stufen A in deren Übernahmeposition (Figur 1).

Die Figuren 2 und 3 verdeutlichen, daß bei einer gleichen Ausgangssituation gemäß Figur 1 die stromabwärts von der festen Stufe F angeordneten Stufen A, B mit geringerer Tiefe ihren Hubzyklus mit einer höheren Frequenz ausüben als die stromaufwärts von der feststehenden Stufe F angeordneten Stufen A, B mit der größeren Tiefe. Auf diese Weise soll der Förderdurchsatz durch alle Stufen etwa gleich sein, so daß ein Aufstauen des Langholzes 3 innerhalb der Übergabevorrichtung vermieden wird.

In einer praktischen Ausführungsform der Erfindung beträgt die Breite der Stufen 3,50 m, die Tiefe der Stufen A, B beträgt stromaufwärts vor der feststehende Stufe F 600 mm und stromabwärts 300 mm. Der Hub der Stufen A, B beträgt jeweils 1 m für die breiten Stufen A, B und 0,5 m für die schmalen Stufen A, B.

Bei dieser Auslegung reicht ein 30 kW-Hydraulik-Antriebsaggregat für die gesamte Anlage aus, weil die nebeneinander liegenden Stufen A, B gegenläufig angetrieben werden, so daß die Kraft der rücklaufenden Stufe gleichzeitig die Energie für die anhebende Stufe liefert.

Selbstverständlich ist die Anzahl der verwendeten Stufen frei nach den Gegebenheiten wählbar. Sie ergibt sich insbesondere aus der Breite der Übergabestrecke, dem Maß der gewünschten Vereinzelung und aus dem etwaig durch den Übergabeförderder zu überwindenden Höhenunterschied.

Statt des hydraulischen Antriebs kann selbstverständlich auch ein pneumatischer oder elektrischer Antrieb Verwendung finden.

Die Neigung der Stufen A, B kann nach den üblichen Kriterien (zu überwindende Strecke, zu überwindende Höhe, gewünschter Vereinzelungsgrad) optimiert werden. Sinnvollerweise beträgt der durch die Hubrichtung der Stufen A, B mit der Lotrechten eingeschlossene Winkel zwischen 10 und 50°, vorzugsweise liegt er bei etwa 30°, so daß die Bewegungsrichtung mit der Horizontalen einen Winkel von etwa 60° einschließt.

## Patentansprüche

1. Übergabevorrichtung zum Transport von quer zur Förderrichtung zugeführtem Langholz (3) auf eine Abfördervorrichtung (7), bei der eine Mehrzahl von parallel zueinander und gegenüber der Lotrechten geneigt angeordneten, gegeneinander abgedichtet ausgebildeten Stufen (A, B), die jeweils relativ zu einer benachbarten Stufe (A, B) derart zyklisch in Neigungsrichtung bewegbar ausgebildet sind, daß in einer Übernahmeposition einer Stufe (A) die in Förderrichtung folgende Stufe (B) über dem Niveau der vorhergehenden Stufe (A) liegt und daß die folgende Stufe (B) in ihrer Übernahmeposition auf oder unter dem Niveau der vorhergehenden Stufe (A) liegt, **dadurch gekennzeichnet, daß** am Übergabeende zur Abfördereinrichtung (7) Stufen (A, B) mit verringerter Tiefe ausgebildet sind, deren Antrieb zur Durchführung eines entsprechend zeitlich kürzeren Zyklus ausgebildet ist.

2. Vorrichtung nach Anspruch 1, dadurch gekennzeichnet, daß Stufen (A, B) unterschiedlicher Tiefe durch wenigstens eine feststehende Stufe (F) voneinander getrennt sind.

3. Übergabevorrichtung nach Anspruch 1 oder 2, dadurch gekennzeichnet, daß die Stufen (A, B) über die Breite der Übergabevorrichtung mit durchgehend dichten Auflageflächen (6) ausgebildet sind..

4. Übergabevorrichtung nach einem der Ansprüche 1 bis 3, dadurch gekennzeichnet, daß eine Mehrzahl von Stufen (A, B) mit gleicher Tiefe in Förderrichtung und mit einem synchronen Antrieb ausgestattet sind.

5. Vorrichtung nach einem der Ansprüche 1 bis 4, dadurch gekennzeichnet, daß jeweils zwei benachbarte Stufen (A, B) durch einen Antrieb gegenläufig antreibbar sind, so daß die beiden Stufen (A, B) gegenseitig jeweils als Gegengewicht wirksam sind.

6. Übergabevorrichtung nach einem der Ansprüche 1 bis 5, dadurch gekennzeichnet, daß eine Mittenposition einer in Förderrichtung folgenden Stufe (B) höher liegt als eine Mittenposition einer vorhergehenden Stufe (A).

7. Übergabevorrichtung nach einem der Ansprüche 1 bis 6, dadurch gekennzeichnet, daß der Antrieb zur Verwendung eines Druckmediums ausgelegt ist.

8. Übergabevorrichtung nach Anspruch 7, gekennzeichnet durch einen hydraulischen Antrieb für die Stufen (A, B).
